(19) Europäisches Patentamt
European Patent Office
Office européen des brevets

(11) EP 2 275 256 A2

(12) **EUROPÄISCHE PATENTANMELDUNG**

(43) Veröffentlichungstag:
**19.01.2011 Patentblatt 2011/03**

(21) Anmeldenummer: **10004904.8**

(22) Anmeldetag: **10.05.2010**

(51) Int Cl.:
***B32B 27/20*** *(2006.01)* ***B32B 27/36*** *(2006.01)*
***B32B 27/08*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **18.05.2009 DE 102009021714**

(71) Anmelder: **Mitsubishi Polyester Film GmbH
65203 Wiesbaden (DE)**

(72) Erfinder:
- **Peiffer, Herbert, Prof. Dr.
55126 Mainz (DE)**
- **Kuhmann, Bodo
65594 Runkel (DE)**

(74) Vertreter: **Schweitzer, Klaus et al
Plate Schweitzer Zounek
Industriepark Kalle-Albert
Rheingaustrasse 196
65203 Wiesbaden (DE)**

(54) **Niedrigsiegelnde Polyesterfolie für unpolare Substrate**

(57) Die Erfindung betrifft eine heißsiegelbare und gegenüber unpolaren Substraten wie PS und PP peelfähige coextrudierte, biaxial orientierte Polyesterfolie, umfassend eine Basisschicht (B) und eine Deckschicht (A), wobei
a) die Basisschicht (B) überwiegend aus einem Copolyester besteht, der Ethylenterephthalat- und Ethylenisophthalat-Einheiten enthält, wobei der Anteil an Ethylenisophthalat-Einheiten im Copolyester zwischen 3 und 15 Mol-% liegt, und
b) die Deckschicht (A)
30 bis 95 Gew.-% Ethylen-polar-Ethylen-Copolymer und 5 bis 70 Gew.-% Polyester enthält,
wobei der Anteil an polar-Ethylen im Copolymer 2,5 bis 15 Mol-% beträgt.

Als Polyester für die Deckschicht (A) wird bevorzugt ein Ethylenterephthalat-Ethylenisophthalat-Copolyester verwendet. Die Folie eignet sich insbesondere als abziehbare Folie (Deckelfolie) für Lebensmittelbehältnisse.

**Figur 1**

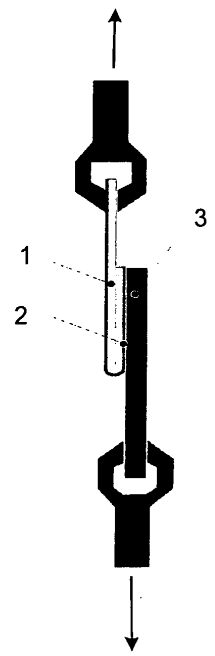


EP 2 275 256 A2

**Beschreibung**

Die Erfindung betrifft eine coextrudierte, siegel- und peelfähige, biaxial orientierte Polyesterfolie mit einer Basisschicht (B) und mindestens einer auf dieser Basisschicht (B) aufgebrachten Deckschicht (A). Die Deckschicht (A) enthält ein niedrigsiegelndes, peelfähiges Polymer, das eine hohe Klebeneigung zu metallischen Oberflächen, beispielsweise Walzen mit metallischen Oberflächen, aufweist. In der Basisschicht (B) ist neben Polyethylenterephthalat auch Polyethylenisophthalat enthalten, wodurch die Folie in Maschinenrichtung bei vergleichsweise niedrigen Temperaturen gestreckt werden kann. Hierdurch wird die Klebeneigung der Folie bei deren Herstellung reduziert. Die Erfindung betrifft weiterhin ein Verfahren zur Herstellung der Folie und ihre Verwendung.

In der Lebensmittelindustrie werden in großem Umfang sowohl flexible als auch starre Behältnisse (im folgenden gemeinsam als Substrate bezeichnet) mit abziehbaren Deckeln verwendet. Die Deckel haben die Aufgabe, das Füllgut vor mechanischer Beschädigung und Schmutz zu schützen und für eine gute Barriere gegen Wasserdampf und Sauerstoff zu sorgen. Zudem müssen die Deckel für den Verbraucher leicht zu öffnen, d. h. peelfähig sein. Die Deckel tragen dazu eine Schicht, die heißsiegelbar und peelfähig ist. Typische Werkstoffe für solche Deckel sind Aluminium, aber auch polymere Werkstoffe wie Polyester oder Polyolefme, die mit einer entsprechenden heißsiegelbaren und peelfähigen Beschichtung versehen sind.

In vielen Fällen bestehen diese Behältnisse aus Polymeren, die unpolarer Natur sind. Hierzu gehören insbesondere die Polymere wie Polystyrol (PS), Polypropylen (PP) oder Polyethylen (PE). Bei Verwendung von Polyesterfolie als Deckelmaterial werden hierbei für die heißsiegelbare und peelfähige Schicht in der Regel solche Polymere eingesetzt, die sich durch eine geringe Kristallit-Schmelztemperatur bzw. durch eine geringe Erweichungstemperatur (Vicat-Erweichungstemperatur) auszeichnen. Diese Schichten weisen jedoch als Nachteil bei der Herstellung der Deckelfolie allgemein eine hohe Klebeneigung zu metallischen oder keramischen Oberflächen, beispielsweise zu Walzen mit metallischen Oberflächen, auf. Die Klebeneigung von solchen Schichten nimmt stark mit der Temperatur dieser Schicht bzw. der Temperatur der mit dieser Schicht in Kontakt kommenden Oberfläche zu. Bei der Herstellung und Verarbeitung von solchen Folien mit hoher Klebeneigung können daher nur ganz bestimmte Verfahren eingesetzt werden.

Die heißsiegelbare und peelfähige Schicht wird nach dem Stand der Technik in der Regel mittels sogenannter off-line-Methoden (d. h. in einem zusätzlichen, der Folienherstellung nachgeordneten Prozessschritt) z. B. auf eine Polyesterfolie aufgebracht. Bei dieser Methode wird zunächst z. B. eine Standardpolyesterfolie nach einem üblichen Verfahren hergestellt. Die so hergestellte Polyesterfolie wird in einem weiteren Verarbeitungsschritt in einer Beschichtungsanlage off-line mit einer heißsiegelbaren und peelfähigen Schicht beschichtet. Bei diesem Verfahren wird das heißsiegelbare und peelfähige Polymer zunächst in einem organischen Lösungsmittel aufgelöst. Die fertige Lösung wird dann über ein geeignetes Antragsverfahren (Messergießer, Rasterwalze, Düse) auf die Folie aufgetragen. In einem nachgeschalteten Trockenofen wird das Lösungsmittel verdunstet, und das peelfähige Polymer bleibt als feste Schicht auf der Folie zurück.

Solch ein off-line-Antrag einer Siegelschicht ist aus mehreren Gründen vergleichsweise kostspielig. Erstens muss die Beschichtung der Folie in mindestens einem separaten Schritt in einer speziellen Apparatur erfolgen. Zweitens muss das verdampfte Lösemittel wieder kondensiert und zurückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend in die Speisen, wo sie den Geschmack verfälschen oder sogar den Konsumenten gesundheitlich schädigen können.

Auf dem Markt werden verschiedene off-line hergestellte heißsiegelbare und peelfähige Polyesterfolien angeboten. Die Polyesterfolien unterscheiden sich im Aufbau und in der Zusammensetzung der Deckschicht (A). Einige Folien und Laminate, die gegen Substrate wie PS, PP und PET (Polyethylenterephthalat) siegeln, sind bereits bekannt.

In der DE-A-101 28 711 wird eine coextrudierte, siegelfähige Polyolefinfolie beschrieben mit einer Deckschicht, die mindestens 70 Gew.-% eines Co- oder Terpolymeren enthält, welches aus Olefin und ungesättigter Carbonsäure oder deren Ester oder deren Anhydrid aufgebaut ist. Die Haftung dieser Folie gegenüber PP, PE, PET, PS, PVC, PC, Glas, Weißblech und Aluminium wird als gut beschrieben. Die Nachteile einer Polyolefin-Folie gegenüber einer Polyethylenterephthalat-Folie (PET-Folie) sind die schlechtere Barriere gegen Sauerstoff, die niedrigere Temperaturbeständigkeit und die schlechteren mechanischen Eigenschaften. So ist z. B. ein Siegeln von solchen Polyolefinfolien bei industriell üblichen Temperaturen von 160 °C und mehr nicht möglich.

Die US 4,333,968 beschreibt eine Polypropylenfolie, die nach der Orientierung in Längsrichtung mit Ethylenvinylacetat-Copolymer (EVA) extrusionsbeschichtet und anschließend quer verstreckt wird. Zusätzlich zu den oben genannten Nachteilen von Polyolefinfolien kommt hier die niedrige Temperaturbeständigkeit des EVA hinzu, so dass anfallender Folienverschnitt nicht regeneriert und bei der Folienherstellung wiedereingesetzt werden kann.

In der WO 03 033258 wird ein siegel- und peelfähiges Deckelfolienlaminat beschrieben. Das Laminat ist aufgebaut aus drei Schichten, einer Schicht aus fasrigem Material (z. B. Papier), einer polymeren Sauerstoffbarriereschicht (PET, EVOH und/oder Polyamid) und einer Siegelschicht. Die letzten beiden Schichten sind z. B. coextrudiert und werden auf die erste auflaminiert. Die Siegelschicht besteht aus einer Kombination von Ethylenmethylacrylat-Copolymer (EMA), EVA und Polyamid-Wachs. Die Siegelschicht hat ein Flächengewicht von 5 bis 30 g/$m^2$ und siegelt gegen PE, PP und PS. Das Laminat wird verwendet als Deckel in der Lebensmittelverpackung z. B. für Milchprodukte. Die Nachteile dieses Laminats sind neben der aufwändigen Herstellung die gegenüber PET-Folien schlechtere Optik (Glanz) der Papieroberfläche und die schlechtere Bedruckbarkeit. Außerdem ist das Laminat als solches nicht rezyklierbar.

Die WO 06 055656 betrifft eine siegelfähige Folie oder ein Laminat mit einer siegelfähigen Folie, wobei die siegelfähige Schicht mit einem Antifog-Agens ausgestattet ist. Die siegelfähige Schicht der Folie enthält oder besteht aus einem Ethylen-Copolymeren oder einem modifizierten Ethylen-Copolymeren oder beiden. Das Ethylen-Copolymer ist ein Copolymer, ein Terpolymer oder ein Tetrapolymer, das Wiederholungseinheiten enthält, die aus Ethylen abgeleitet sind, und das 5 bis 50 Gew.-% von einem oder mehreren polaren Monomeren enthält, die ausgewählt sind aus der Gruppe bestehend aus Vinylcarboxylaten, Acrylsäure, Alkylacrylsäure, Acrylsäurealkylester (= Acyrylat) und Alkylacrylat. Die siegelfähige Schicht, die die siegelfähige Schicht umfassende Folie bzw. die weiteren Schichten können nach mehreren, nicht näher spezifizierten Verfahren gefertigt werden, z. B. über die Herstellung von Blasfolie, in-line oder off-line mittels diverser Beschichtungsverfahren oder mittels Coextrusion. Als weitere Schichten werden solche genannt, die aus Nylon, Polypropylen, Polyethylen, Ionomeren, Polyethylenvinylacetat, Polyethylenterephthalat, Polystyrol, Polyethylenvinylalkohol, Polyvinylidenchlorid oder aus Kombinationen von zwei oder mehreren dieser Materialien hergestellt werden.

In den Beispielen werden Laminate (63,5 μm dick) angegeben, die durch Kleber-Kaschierung (nicht durch Coextrusion) aus zwei unterschiedlichen Folientypen hergestellt werden. Als Trägerfolie wird eine 12 μm dicke PET-Folie und als Siegelfolie eine Blasfolie bestehend aus 3 Schichten verwendet. Diese Schichten bestehen aus HDPE, HDPE+LDPE und aus modifiziertem EVA oder EMA in der Siegelschicht. Die mechanischen (die Folie curlt), thermischen und optischen (Trübung, Glanz) Eigenschaften der Folie/des Laminates sind verbesserungswürdig, da es trübes HDPE enthält. Das Laminat zeichnet sich durch hohe Herstellungskosten aus, zudem ist es nicht regenerierbar und damit nicht umweltverträglich. Weiterhin haften solche Folien sehr stark an metallischen oder keramischen (Walzen-) Oberflächen, was zu zusätzlichen Problemen bei ihrer Herstellung führt.

Die EP-A-1 471 096, EP-A-1471 097, EP-A-1475 228, EP-A-1 475 229, EP-A-1 471 094 und EP-A-1471098 beschreiben heißsiegelbare und gegenüber A/CPET peelfähige Polyesterfolien mit ABC-Aufbau, die zur Einstellung der gewünschten Peeleigenschaften in der peelfähigen und heißsiegelbaren Decksicht amorphe, aromatische und aliphatische Copolyester und entweder ca. 2 bis 10 Gew.-% anorganische oder organische Partikel oder aber ein polyesterunverträgliches Polymer wie z. B. Norbomen/Ethylen enthalten. Die Folien zeichnen sich durch gute Peeleigenschaften gegen polare Substrate wie PET oder PVC aus, gegenüber PS und PP sind sie jedoch nicht siegelfähig. Außerdem neigen sie bei ihrer Herstellung unter Umständen zum Anhaften oder Ankleben, insbesondere an Walzen mit keramischen oder metallischen Oberflächen.

Die EP-B-1 165 317 beschreibt eine heißsiegelbare Polyesterfolie, die aus einer amorphen Heißsiegelschicht und einer Basisschicht aufgebaut ist. Die Heißsiegelschicht umfasst einen Copolyester aus einem aliphatischen und einem cycloaliphatischen Diol mit einer oder mehreren Carbonsäuren. Die Basisschicht (= Substratschicht) umfasst einen Copolyester aus Terephthalsäure (TPA) und Isophthalsäure (IPA) mit einem oder mehreren Diolen, die ausgewählt sind aus aliphatischen und cycloaliphatischen Diolen. Die Folien zeichnen sich durch gute Siegeleigenschaften aus, insbesondere gegenüber metallischen Substraten. Sie besitzen jedoch unzureichende Peeleigenschaften gegenüber metallischen Substraten, insbesondere aber unzureichende Peeleigenschaften gegenüber den genannten Substraten für die Deckelanwendung wie PS, PP oder PE.

Aufgabe der vorliegenden Erfindung war es daher, eine heißsiegelbare und peelfähige Folie zur Verfügung zu stellen, die sich insbesondere durch sehr gute Peeleigenschaften zu unpolaren Substraten auszeichnet und die eine geringe Klebeneigung bei ihrer Herstellung, z. B. gegenüber metallischen und keramischen Oberflächen/Walzen, aufweist.

Unter heißsiegelbar wird hier die Eigenschaft einer Folie verstanden, die zumindest eine heißsiegelbare Deckschicht (A) aufweist, die mittels Siegelbacken durch Anwendung von Wärme (bevorzugt 130 bis 220 °C) und Druck (bevorzugt größer als 2 bar) in einer bestimmten Zeit (bevorzugt 0,2 bis 4 s) mit sich selbst bzw. mit einem Substrat verbunden werden kann, ohne dass dabei die Trägerschicht (= Basisschicht (B)) selbst plastisch wird.

Eine weitere Aufgabe war es daher, eine Folie bereitzustellen, die gegenüber unpolaren Substraten eine Mindestsiegeltemperatur von bevorzugt kleiner/gleich 140 °C, insbesondere kleiner/gleich 130 °C, besonders bevorzugt kleiner/gleich 120 °C, aufweist.

Unter peelfähig wird die Eigenschaft einer Folie verstanden, die zumindest eine heißsiegelbare und peelfähige Deckschicht (A) aufweist, die nach der Heißsiegelung auf ein Standardsubstrat derart wieder von dem Substrat abgezogen werden kann, dass dabei die Folie weder ein- noch abreißt. Der Verbund aus heißsiegelfähiger Folie und Substrat soll beim Abziehen der Folie von dem Substrat in der Naht zwischen der Heißsiegelschicht und der Substratoberfläche

aufgehen.

Eine weitere Aufgabe war es daher, eine Folie bereitzustellen, die im gesamten Siegelbereich (bevorzugte Mindestsiegeltemperatur von 140 °C bis maximale Siegeltemperatur von 220 °C) peelfähig ist, d. h. beim Peelen weder ein- noch abreißt.

Zugleich war es eine andere Aufgabe der vorliegenden Erfindung, solche Peelfolien bereitzustellen, die eine geringe Klebeneigung zu keramischen, metallischen oder Metall enthaltenden Oberflächen, beispielsweise zu Walzen im Längsstreckwerk (= Streckwerk zur Streckung der Folie in Maschinenrichtung (MDO)), aufweisen, so dass zur Herstellung der Folie in der Industrie übliche Streckwerke verwendet werden können.

Zusammenfassend sollte sich die Folie gemäß der vorliegenden Erfindung bevorzugt durch die folgenden Eigenschaftskombinationen auszeichnen:

· Sie sollte gegenüber Substraten, aufgebaut aus unpolaren Polymeren, heißsiegelbar sein, d. h. eine Mindestsiegeltemperatur von bevorzugt kleiner/gleich 140 °C, insbesondere kleiner/gleich 130 °C, besonders bevorzugt kleiner/gleich 120 °C aufweisen.

· Sie sollte gegenüber Substraten, aufgebaut aus unpolaren Polymeren wie, z. B. PS und PP, im gesamten Siegelbereich (bevorzugt 140 °C bis 220 °C) peelen, d. h. die Peelkraft sollte größer/gleich 1,5 N je 15 mm, bevorzugt größer/gleich 2 N je 15 mm und besonders bevorzugt größer gleich 2,5 N je 15 mm Folienstreifenbreite sein.

· Die Folie sollte sich wirtschaftlich herstellen lassen. Die Siegelschicht sollte eine möglichst geringe Klebeneigung zu keramischen, metallischen oder Metall enthaltenden Oberflächen, beispielsweise zu Walzen in der Längsstreckung, aufweisen, womit zur Herstellung der Folie in der Industrie übliche Streckwerke eingesetzt werden könnten.

· Weiterhin sollte die Folie bei heute üblichen Maschinengeschwindigkeiten von bis zu 500 m/min herstellbar und zudem regenierbar (rezyklierbar) sein.

· Des Weiteren sollte eine gute Haftung (bevorzugt größer als 2 N/15 mm Folienbreite) zwischen den einzelnen Schichten der Folie ohne Applikation eines zusätzlichen Klebers für deren praktische Anwendung gewährleistet sein.

Gelöst wird die Aufgabe durch die Bereitstellung einer coextrudierten, biaxial orientierten Polyesterfolie, umfassend eine Basisschicht (B) und eine Deckschicht (A), wobei

a) die Basisschicht (B) überwiegend aus einem Copolyester besteht, der Ethylenterephthalat- und Ethylenisophthalat-Einheiten enthält, wobei der Anteil an Ethylenisophthalat-Einheiten im Copolyester zwischen 3 und 15 Mol-% liegt, und

b) die Deckschicht (A)

30 bis 95 Gew.-% Ethylen-polar-Ethylen-Copolymer und
5 bis 70 Gew.-% Polyester enthält,
wobei der Anteil an polar-Ethylen im Copolymer 2,5 bis 15 Mol-% beträgt.

Bei der Angabe der Molprozente in Polymeren bzw. Copolymeren beziehen sich diese - sofern nichts anderes gesagt ist - auf die von den genannten Monomeren abgeleiteten Einheiten im Polymeren bzw. Copolymeren. Gleiches gilt für die Beschreibung des strukturellen Aufbaus der Polymere bzw. Copolymere selbst.

Die Gew.-%-Angaben beziehen sich hier und im folgenden, soweit nicht anders angegeben, auf die Masse der jeweiligen Schicht der erfindungsgemäßen Folie.

Die heißsiegelbare und peelfähige Deckschicht (A) zeichnet sich durch charakteristische Merkmale aus. Sie besitzt eine Siegelanspringtemperatur (= Mindestsiegeltemperatur) gegenüber Substraten aus unpolaren Polymeren von bevorzugt nicht mehr als 140 °C, insbesondere nicht mehr als 130 °C und besonders bevorzugt nicht mehr als 120 °C, und eine Siegelnahtfestigkeit gegenüber diesen von bevorzugt mindestens 1,5 N, insbesondere mindestens 2 N und besonders bevorzugt von mindestens 2,5 N (bezogen auf 15 mm Folienbreite). Die heißsiegelbare und peelfähige Deckschicht (A) hat gegenüber Substraten aus unpolaren Polymeren eine maximale Siegeltemperatur von bevorzugt 220 °C, wobei im gesamten Siegelbereich (Mindestsiegeltemperatur bis maximale Siegeltemperatur) eine gegenüber Substraten aus unpolaren Polymeren peelfähige Folie erhalten wird.

Die Folie nach der vorliegenden Erfindung umfasst eine Basisschicht (B) und mindestens eine erfindungsgemäße Deckschicht (A). In diesem Fall ist die Folie zweischichtig aufgebaut. In einer bevorzugten Ausführungsform ist die Folie drei- oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C) - Schichtaufbau A-B-C. Bei einer vierschichtigen Ausführungsform enthält die Folie eine Zwischenschicht (D) zwischen der Basisschicht (B) und der Deckschicht (A) oder (C).

Die Basisschicht (B) der Folie besteht bevorzugt zu mindestens 80 Gew.-% aus thermoplastischem Polyester. Erfindungsgemäß besteht die Basisschicht (B) überwiegend (zu größer als 50 Gew.-%, bevorzugt zu mehr als 80 Gew.-

%) aus einem Copolyester, der überwiegend aus Isophthal- und Terephthalsäure-Einheiten und aus Ethylenglykol-Einheiten zusammengesetzt ist. Überwiegend bedeutet hier, dass der Copolyester bevorzugt zu >50 Mol-%, besonders bevorzugt >70 Mol-% und ganz besonders bevorzugt >90 Mol-% Ethylenterephthalat- und Ethylenisophthalat-Einheiten enthält. Die restlichen Monomereinheiten stammen aus anderen aliphatischen, cycloaliphatischen oder aromatischen Diolen bzw. Dicarbonsäuren. Die bevorzugten Copolyester, die die gewünschten Folieneigenschaften bereitstellen, sind solche, die ausschließlich aus Etylenterephthalat- und Ethylenisophthalat-Einheiten aufgebaut sind. Der Anteil an Ethylenterephthalat beträgt bevorzugt 85 bis 97 Mol-% und der entsprechende Anteil an Ethylenisophthalat 3 bis 15 Mol-%. Bevorzugt sind weiterhin Copolyester, bei denen der Anteil an Ethylenterephthalat 90 bis 97 Mol-% und der entsprechende Anteil an Ethylenisophthalat 3 bis 10 Mol-% beträgt, und ganz besonders bevorzugt sind Copolyester, bei denen der Anteil an Ethylenterephthalat 92 bis 97 Mol-% und der entsprechende Anteil an Ethylenisophthalat 3 bis 8 Mol-% beträgt. Bei der Angabe der Mengen für die Dicarbonsäuren bildet die Gesamtmenge aller Dicarbonsäuren 100 Mol-%. Analog bildet die Gesamtmenge aller Diole auch 100 Mol-%.

Für die Basisschicht (B) können auch Mischungen verschiedener Polyester bzw. Copolyester verwendet werden.

Geeignete andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C3-C19)-Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Die Herstellung der erfindungsgemäßen Polyester kann nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid, Titanoxide oder Ester sowie Germanium- und Aluminium-Verbindungen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Durch die erfindungsgemäße Auswahl der Polymere für die Basisschicht (B) wird die Herstellbarkeit der an sich zum Kleben neigenden Peelfolie deutlich verbessert. Besonders in der Längsstreckung, in der die Folie in Maschinenrichtung gestreckt wird, wird durch die erfindungsgemäße Auswahl der Polymere für die Basisschicht (B) die Klebeneigung der Folie deutlich reduziert. Bei sonst gleichen Streckbedingungen können die Strecktemperaturen deutlich herabgesetzt werden. So können gegenüber einer Standardpolyesterfolie, bei der in der Basisschicht (B) Polyethylenterephthalat verwendet wird, die Temperaturen in der Längsstreckung (Aufheiz- und Strecktemperaturen) in einem Bereich von 5 bis 25 °C reduziert und damit die Klebeneigung der Folie während ihrer Herstellung deutlich verringert werden.

Es hat sich herausgestellt, dass (bei konstanter, d. h. gleichleibender Zusammensetzung der peelfähigen Deckschicht (A)) die wesentlichen Einflussgrößen auf die Klebrigkeit der Folie die Verfahrensparameter in der Längsstreckung sind. Zu den Verfahrensparametern gehören insbesondere die Strecktemperatur $T_{MD}$, das Streckverhältnis $\lambda_{MD}$, die Folienbahngeschwindigkeit und eventuell die Art der Streckung (MD = Streckung in Längs- oder Maschinenrichtung).

Übliche Werte für die genannten Parameter bei nicht erfindungsgemäßen Folien sind z. B.:

| | |
|---|---|
| Aufheiztemperaturen | 60 (Eingang Aufheizung) bis 120 °C (Ausgang Aufheizung) |
| Strecktemperaturen | 100 bis 115 °C |
| Streckverhältnisse | 3,0 bis 5,0 |

Bei den erfindungsgemäßen Folien liegen - bedingt durch die spezielle Zusammensetzung der Basisschicht (B) - die Temperaturen und Streckverhältnisse dagegen innerhalb von Bereichen, wie sie die untenstehende Tabelle wiedergibt:

| | |
|---|---|
| Aufheiztemperaturen | 60 (Eingang Aufheizung) bis 95 °C (Ausgang Aufheizung) |
| Strecktemperaturen | 75 bis 95 °C |
| Streckverhältnisse | 2,0 bis 4,5 |

Die genannten Daten beziehen sich bei der Längsstreckung auf die so genannte NTEP-Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegeben Temperaturen beziehen sich auf die jeweiligen Walzentemperaturen, die mittels IR gemessen wurden.

Es hat sich gezeigt, dass sich die Folie bei Verwendung der erfindungsgemäßen Konzentrationen für die Ethylenterephthalat- und Ethylenisophthalat-Einheiten im Copolymeren für die Basisschicht (B) bei den genannten niedrigen Strecktemperaturen unproblematisch und verfahrenssicher herstellen lässt, da sich insbesondere bei diesen gegenüber dem Stand der Technik niedrigeren Strecktemperaturen die Klebeneigung einer Folie bei unveränderter Peelschicht (A) deutlich verringert.

Wird dagegen in der Basisschicht (B) ein Polymer verwendet, bei dem der Anteil an Ethylenisophthalat im Copolymeren kleiner als 3 Mol-% ist, so lassen sich die Folien bei den zur Reduzierung der Klebeneigung der Deckschicht (A) geforderten niedrigen Längsstrecktemperaturen nicht mehr verfahrenssicher herstellen. Die Folie reißt in der Längsstreckung häufig ab und wickelt sich im ungünstigsten Fall um die Streckwalzen, was einen Wechsel der Walzen zur Folge hat.

Wird andererseits in der Basisschicht (B) der Anteil an Ethylenisophthalat im Copolymeren über den Erfindungsbereich erhöht, so verliert die Folie ihre mechanischen Eigenschaften, was unerwünscht ist. Ebenso wird hierdurch ihr Schrumpf erhöht, was ebenfalls unerwünscht ist.

Die durch Coextrusion aufgebrachte siegelbare und peelfähige Deckschicht (A) besteht zur Erzielung der gewünschten Peeleigenschaften aus einem Polymer mit niedrigem Erweichungspunkt. Erfindungsgemäß ist die Vicat-Erweichungstemperatur der peelfähigen Deckschicht (A) bevorzugt kleiner als 70 °C, besonders bevorzugt kleiner als 65 °C und ganz besonders bevorzugt kleiner als 60 °C. Ist die Vicat-Erweichungstemperatur der peelfähigen Deckschicht (A) größer als 70 °C, so verliert die Folie ihre erfindungsgemäßen Peeleigenschaften.

Die siegelbare und peelfähige Deckschicht (A) ist mindestens zu 30 Gew.-%, bevorzugt mindestens zu 35 Gew.-% und besonders bevorzugt mindestens zu 40 Gew.-% aus einem Ethylen-polar-Ethylen-Copolymeren aufgebaut. Der maximale Anteil des Ethylen-polar-Ethylen-Copolymeren in der siegelbaren und peelfähigen Deckschicht (A) beträgt 95 Gew.-%, bevorzugt 90 Gew.-% und besonders bevorzugt 85 Gew.-%.

Beträgt der Anteil des Ethylen-polar-Ethylen-Copolymeren in der siegelbaren und peelfähigen Deckschicht (A) weniger als 30 Gew.-%, so wird die geforderte Peelkraft zum Öffnen des Deckels nicht erreicht. Beträgt andererseits der maximale Anteil des Ethylen-Copolymeren in der siegelbaren und peelfähigen Deckschicht (A) mehr als 95 Gew.-%, so ist die Haftung der Deckschicht (A) zur Basisschicht (B) oder zu einer zwischen (B) und (A) befindlichen Zwischenschicht (D) zu gering. Die Deckschicht (A) delaminiert beim Peelen von der Basisschicht (B), was unerwünscht ist.

Unter "polar-Ethylen" wird erfindungsgemäß eine Monomereinheit verstanden, die aus einem Ethylen-Baustein und einer oder mehreren polaren Gruppen besteht. Das Copolymer ist dann aus "reinen" Ethylen-Einheiten und solchen polar-Ethylen-Einheiten aufgebaut entsprechend der Formel

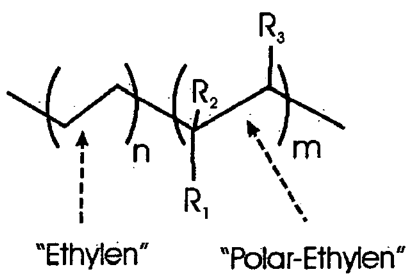

wobei

R$_1$ $C_1$-$C_3$-Alkoxycarbonyl oder -CO-OR$_4$ bedeutet, wobei R$_4$ Wasserstoff, lineares oder verzweigtes $C_1$-$C_{18}$-Al-

kyl, welches seinerseits ggf. mit OH oder Phenyl ein-, zwei-, drei- oder mehrfach substituiert ist, $C_5$-$C_{12}$-Cycloalkyl, welches ggf. mit einer $C_1$-$C_3$-Brücke überbrückt ist und/oder mit niedrig-Alkyl ein-, zwei- oder mehrfach substituiert ist, Phenyl oder -($CH_2$-$CH_2$-O)$_q$-$R_5$ bedeutet, wobei $R_5$ Wasserstoff, $C_1$-$C_{24}$-Alkyl oder Phenyl bedeutet, wobei das Phenyl seinerseits mit $C_1$-$C_{12}$-Alkyl ein-, zwei- oder mehrfach substituiert sein kann, und

$R_2$ q dem Polymerisationsgrad des Restes -($CH_2$-$CH_2$-O)$_q$-$R_5$ entspricht, Wasserstoff oder niedrig-Alkyl bedeutet,

$R_3$ -$COOR_6$ oder Wasserstoff bedeutet, wobei $R_6$ Wasserstoff oder ein niedrig-Alkylrest ist, und

n und m identische oder verschiedene ganze Zahlen sind, wobei die Summe n+m dem Polymerisationsgrad des Ethylen-polar-Ethylen-Copolymers entspricht.

Bevorzugt sind Copolymere worin

$R_1$ Methoxycarbonyl oder -CO-$OR_4$ bedeutet, wobei $R_4$ Wasserstoff, lineares oder verzweigtes $C_1$-$C_{18}$-Alkyl, welches seinerseits ggf. mit OH oder mit Phenyl einfach oder mit OH dreifach substituiert ist, $C_5$-$C_6$-Cycloalkyl, welches ggf. mit einer $C_1$-Brücke überbrückt ist und/oder mit niedrig-Alkyl substituiert ist Phenyl oder -($CH_2$-$CH_2$-O)$_q$-$R_5$ bedeutet, wobei $R_5$ Wasserstoff, Methyl, $C_{22}$-Alkyl oder Phenyl bedeutet, wobei das Phenyl seinerseits mit $C_7$-$C_9$-Alkyl substituiert sein kann, und q dem Polymerisationsgrad des Restes -($CH_2$-$CH_2$-O)$_q$-$R_5$ entspricht,

$R_2$ Wasserstoff oder Methyl bedeutet,

$R_3$ -$COOR_6$ oder Wasserstoff bedeutet, wobei $R_5$ Wasserstoff oder ein niedrig-Alkylrest ist, und

n und m identische oder verschieden ganze Zahlen sind, wobei die Summe n+m dem Polymerisationsgrad des Ethylen-polar-Ethylen-Copolymers entspricht.

"Niedrig-Alkyl" steht für einen Methyl-, Ethyl-, Propyl-, i-Propyl-, Butyl-, i-Butyl- oder tert.-Butyl-Rest.

Der Anteil an polar-Ethylen-Wiederholungseinheiten im Ethylen-polar-Ethylen-Copolymer beträgt bevorzugt 2,5 bis 15 Mol-%, insbesondere 3 bis 12 Mol-% und besonders bevorzugt 5 bis 11 Mol-%.

Beispiele für solche polar-Ethylen-Monomere bzw. -Wiederholungseinheiten beinhalten Vinylacetat, Acrylsäure, Methacrylsäure, Ethylacrylat, Ethylmethacrylat, Methylacrylat, Methylmethacrylat, Propylacrylat, Propylmethacylat, Iso-Propylacrylat, Iso-Propylmethacylat, N-Butylacrylat, N-Butlymethacrylat, Iso-Butylacrylat, Iso-Butlymethacrylat, Tert-Butylacrylat, Tert-Butylmethacrylat, N-Hexylacrylat, N-Hexylmethacylat, N-Octylacrylat, N-Octylmethacrylat, 2-Octylacrylat, 2-Octylmethacrylat, Undecylacrylat, Undecylmethacrylat, Octadecylacrylat, Octadecylmethacrylat, Dodecylacrylat, Dodecylmethacrylat, 2-Ethylhexylacrylat, 2-Ethylhexylmethacrylat, Isobornylacrylat, Isobornylmethacrylat, Cyclohexylacrylat, Cyclohexylmethacrylat, Benzylacrylat, Benzylmethacrylat, Phenylacrylat, Phenylmethacrylat, 2-Hydroxyethylacrylat, 2-Hydroxyethylmethacrylat, Glycidylacrylat, Glycidylmethacrylat, Poly(ethylenglykol)acrylat, Poly (ethylenglykol)methacrylat, Poly(ethylenglykol)methyl-etheracrylat, Poly(ethylenglykol)methyl-ether-methacrylat, Poly (ethylenglykol)behenyl-etheracrylat, Poly(ethylenglykol)behenyl-ether-methacrylat, Poly(ethylenglykol)-4-nonylphenylether-acrylat, Poly(ethylenglykol)-4-nonylphenyl-ether-methacrylat, Poly(ethylenglykol)-phenyl-ether-acrylat, Poly (ethylenglykol)-phenyl-ether-methacrylat, Di-methyl-maleat, Di-ethyl-maleat, Di-butyl-maleat, Di-methyl-fumarat, Di-ethyl-fumarat, Di-butyl-fumarat, wobei solche bevorzugt sind, die Vinylacetat, Acrylsäure, Methacrylsäure, Alkyl(meth) acrylat oder Kombinationen von zwei oder mehreren davon enthalten.

Die erfmdungsgemäß verwendeten Ethylen-polar-Ethylen-Copolymere sind entweder als solche kommerziell erhältlich oder lassen sich - durch dem Fachmann geläufige Verfahren - leicht herstellen, beispielsweise durch Verfahren wie sie in der WO 06/055656 beschrieben sind.

Erfindungsgemäß enthält die siegelbare und peelfähige Deckschicht (A) neben dem Ethylen-polar-Ethylen-Copolymeren Polyester in einem Bereich von 5 bis 70 Gew.-%, bevorzugt 10 bis 65 Gew.-% und besonders bevorzugt 15 bis 60 Gew.-%.

Beträgt der Anteil des Polyesters in der siegelbaren und peelfähigen Deckschicht (A) weniger als 5 Gew.-%, so ist die Haftung der Deckschicht (A) z. B. zur Basisschicht (B) zu gering. Die Deckschicht (A) delaminiert beim Peelen von der Basisschicht (B), was unerwünscht ist. Beträgt der Anteil des Polyesters in der siegelbaren und peelfähigen Deckschicht (A) mehr als 70 Gew.-%, so kann die geforderte Peelkraft zu PS und PP nicht mehr erreicht werden.

Für den Polyester wird im Allgemeinen der gleiche Polyestertyp ausgewählt wie er bereits für die Basisschicht (B) beschrieben wurde. In diesem Fall wird der Polyester beispielsweise ausgewählt aus der Gruppe PET, IPA (Polyester-Copolymer auf Basis von Terephthalat und Isophthalat) und Mischungen davon.

Als besonders vorteilhaft hat es sich erwiesen, wenn ein Polyester auf Basis von im Wesentlichen Copolyestern verwendet wird, die überwiegend aus Isophthal- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten

Copolyester, die die gewünschten Siegel- und Peeleigenschaften bereitstellen, sind solche, die aus Etylenterephthalat- und Ethylenisophthalat-Einheiten und aus Ethylenglykol-Einheiten aufgebaut sind. Der Anteil an Ethylenterephthalat beträgt hierbei in der Regel 60 bis 95 Mol-% und der entsprechende Anteil an Ethylenisophthalat 40 bis 5 Mol-%. Bevorzugt sind Copolyester, bei denen der Anteil an Ethylenterephthalat 65 bis 90 Mol-% und der entsprechende Anteil an Ethylenisophthalat 35 bis 10 Mol-% beträgt, und ganz bevorzugt sind Copolyester, bei denen der Anteil an Ethylenterephthalat 70 bis 85 Mol-% und der entsprechende Anteil an Ethylenisophthalat 30 bis 15 Mol-% beträgt.

Die Zugabe von Polyester zu der siegelbaren und peelfähigen Deckschicht (A) hat daneben einen weiteren günstigen Effekt auf die Herstellbarkeit der Folie. Durch die Zugabe von Polyester wird die an sich sehr hohe Klebeneigung der Deckschicht (A) zu metallischen Walzen zusätzlich verringert, was ausgesprochen wünschenswert ist.

Die Deckschicht (A) besteht überwiegend aus dem beschriebenen Copolymer und Polyester. "Überwiegend" bedeutet, dass sie bevorzugt zu mindest 90 Gew.-% aus diesen Rohstoffen besteht. Bis zu 10 Gew.-% an Additiven können in dieser Schicht vorhanden sein.

Die heißsiegelbare und peelfähige Deckschicht (A) kann des weiteren anorganische und/oder organische Partikel (auch als "Pigmente" oder "Antiblockmittel" bezeichnet) in einer Konzentration von bevorzugt 0,5 bis 10 Gew.-%, bezogen auf die Masse der Deckschicht (A), enthalten. In einer bevorzugten Ausführungsform enthält die Deckschicht (A) anorganische und/oder organische Partikel in einer Konzentration von 0,7 bis 9 Gew.-%. In einer besonders bevorzugten Ausführungsform enthält die Deckschicht (A) anorganische und/oder organische Partikel in einer Konzentration von 1,0 bis 8 Gew.-%.

Übliche Partikel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Titandioxid, Kaolin oder vernetzte Polystyrol- oder Arcrylat-Partikel. Die Partikel können der Schicht in den jeweils vorteilhaften Konzentrationen, z. B. als glykolische Dispersion während der Polykondensation oder über Masterbatche bei der Extrusion, zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden und erzeugen nur wenige Vakuolen (Hohlräume). Vakuolen entstehen an den Partikeln bei der biaxialen Orientierung, verursachen im Allgemeinen Trübung und sind daher für die vorliegende Erfindung nicht erwünscht. Geeignete Partikel können z. B. über die Firmen Grace, Fuji, Degussa oder Ineos bezogen werden.

Die Teilchen haben bevorzugt einen mittleren Partikeldurchmesser $d_{50}$ von 2 bis 15 μm. In einer weiteren bevorzugten Ausführungsform haben die Teilchen einen mittleren Partikeldurchmesser $d_{50}$ von 2,5 bis 15 μm, und in einer besonders bevorzugten Ausführungsform haben die Teilchen einen mittleren Partikeldurchmesser $d_{50}$ von 3,0 bis 15 μm.

Um das Verarbeitungsverhalten der Folie nach der vorliegenden Erfindung weiterhin zu verbessern, ist es günstig, wenn das Verhältnis aus Partikeldurchmesser und Schichtdicke im Bereich von 0,2 bis 2,0, bevorzugt im Bereich von 0,25 bis 1,8 und besonders bevorzugt im Bereich von 0,3 bis 1,5 liegt.

Weiterhin ist es von Vorteil, in die Basisschicht (B) bei einem zweischichtigen Folienaufbau (AB) bzw. in die bevorzugt nicht siegelfähige Deckschicht (C) bei einem dreischichtigen Folienaufbau (ABC) ebenfalls Partikel einzuarbeiten.

Bei der zweischichtigen und der besonders vorteilhaften dreischichtigen Ausführungsform der erfindungsgemäßen Folie liegt die Dicke der Deckschicht (A) bevorzugt im Bereich von 2 bis 20 μm, insbesondere im Bereich von 3 bis 19 μm und besonders bevorzugt im Bereich von 4 und 18 μm. Beträgt die Dicke der Deckschicht (A) dagegen weniger als 2 μm, so ist die Folie u. U. gegenüber PS und PP nicht mehr heißsiegelbar.

Die Dicke der anderen, bevorzugt nicht siegelbaren Deckschicht (C) kann gleich der Deckschicht (A) sein oder von dieser verschieden; ihre Dicke liegt im Allgemeinen zwischen 1 und 20 μm. Die Zusammensetzung der Schicht (C) ist in der Regel von der der Schicht (A) verschieden. Sie besteht überwiegend aus thermoplastischem Polyester oder Copolyester, insbesondere überwiegend aus PET.

Die Gesamtdicke der erfindungsgemäßen Polyesterfolie kann innerhalb bestimmter Grenzen variieren. Sie beträgt bevorzugt 5 bis 500 μm, insbesondere 10 bis 450 μm, vorzugsweise 15 bis 400 μm, wobei die Schicht (B) einen Anteil von vorzugsweise 45 bis 97 % an der Gesamtdicke aufweist.

In einer bevorzugten Ausführungsform der Folie gemäß der vorliegenden Erfindung enthält die Basisschicht (B) zumindest ein weißfärbendes Pigment in einer Konzentration von bevorzugt 3 bis 20 Gew.-%, vorzugsweise 4 bis 18 Gew.-%. Die Konzentration wird dabei erfindungsgemäß so gewählt, dass der Weißgrad der Folie (nach Berger) bevorzugt größer als 70 % ist. Im anderen Fall ist die Folie für die gedachten Anwendungen (z. B. gesiegelte Deckelfolie auf Becher) von den optischen Eigenschaften weniger geeignet, da sie zu durchscheinend ist.

Zur Erzielung der vorgenannten Eigenschaften, insbesondere des gewünschten Weißgrades der Folie, werden bevorzugt sowohl in die Basisschicht (B) als auch in die Deckschicht (C) die notwendigen Pigmente eingearbeitet. In Frage kommen z. B. Titandioxid, Calciumcarbonat, Bariumsulfat, Zinksulfid oder Zinkoxid. In bevorzugter Weise wird

$TiO_2$ als alleiniges weißfärbendes Pigment verwendet. Es wird bevorzugt als Extrusionsmasterbatch (die Titandioxid-Konzentration ist hier deutlich höher als in der biaxial orientierten Folie) dem Originalrohstoff zugegeben. Typische Werte für die $TiO_2$-Konzentration im Extrusionsmasterbatch sind 50 Gew.-% Titandioxid. Das Titandioxid kann sowohl vom Rutil-Typ als auch vom Anatas-Typ sein. Vorzugsweise wird Titandioxid vom Rutil-Typ verwendet. Die Korngröße des Titandioxids liegt in der Regel zwischen 0,05 und 0,5 μm, bevorzugt zwischen 0,1 und 0,3 μm. Die Folie erhält durch die eingearbeiteten Pigmente ein brillantes weißes Aussehen. Um zu dem gewünschten Weißgrad (bevorzugt >70 %) und zu der gewünschten niedrigen Transparenz (bevorzugt < 50 %) zu gelangen, sollte die Basisschicht (B) hochgefüllt sein. Die Partikelkonzentration zur Erzielung der gewünschten niedrigen Transparenz liegt bevorzugt bei größer/gleich 3 Gew.%, jedoch kleiner/gleich 20 Gew.-%, vorzugsweise über 4 Gew.%, jedoch unterhalb 18 Gew.-%, bezogen auf das Gesamtgewicht der Basisschicht (B).

Zu einer weiteren Steigerung des Weißgrades können geeignete optische Aufheller der Basisschicht und/oder den anderen Schichten zugesetzt werden. Geeignete optische Aufheller sind beispielsweise Hostalux KS (Firma: Clariant, DE) oder Eastobrite OB-1 (Firma: Eastman, USA).

Es wurde gefunden, dass bei der bevorzugten Verwendung von im Wesentlichen $TiO_2$ als einfärbendem Weißpigment die Folie weniger anfällig gegenüber Einreißen und Delaminierung wird. Die Zugabe des $TiO_2$ bevorzugt über die Masterbatchtechnologie hat den Vorteil, dass Farbunterschiede z. B. durch nicht konstante Regenerateigenschaften relativ leicht korrigiert werden können. Bei Verwendung von $TiO_2$ als alleinigem Pigment wird die Folie besonders glatt und damit glänzender, neigt aber eventuell zum Verblocken.

Die Basisschicht und die anderen Schichten können zusätzlich übliche Additive wie Stabilisatoren (UV, Hydrolyse), flammhemmende Stoffe oder Füller enthalten. Sie werden zweckmäßig dem Polymer bzw. der Polymermischung bereits vor dem Aufschmelzen zugesetzt. Die Deckschicht (C) kann insbesondere einfärbende Pigmente und/oder Antiblockmittel bevorzugt in den für die Schichten (B) und (A) angegebenen Konzentrationen enthalten.

Die Erfindung betrifft auch ein Verfahren zur Herstellung der erfindungsgemäßen Polyesterfolie nach dem an sich aus der Literatur ("Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988") bekannten Extrusionsverfahren bzw. Coextrusionsverfahren.

Im Rahmen dieses Verfahrens wird so vorgegangen, dass die der Folie entsprechenden Schmelzen durch eine Flachdüse coextrudiert werden, die so erhaltene Folie zur Verfestigung auf einer oder mehreren Walzen abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im Allgemeinen aufeinander folgend durchgeführt, wobei dann die aufeinander folgende biaxiale Streckung, bei der zuerst längs (in Maschinenrichtung) und dann quer (senkrecht zur Maschinenrichtung) gestreckt wird, bevorzugt ist.

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive bereits im Polymer bzw. in der Polymermischung enthalten sein können. Die Schmelze wird dann durch eine Flachdüse (Breitschlitzdüse) gepresst, und die ausgepresste Schmelze wird auf einer oder mehreren gekühlten Abzugswalzen abgezogen, wobei die Schmelze abkühlt und sich zu einer Vorfolie verfestigt. Beim Coextrusionsverfahren gilt dies analog für die verschiedenen Schichten der Folie, die übereinander durch eine entsprechende Flachdüse gleichzeitig gepresst/ coextrudiert werden.

Die biaxiale Streckung wird im Allgemeinen aufeinander folgend (sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperaturen, bei der die biaxiale Streckung durchgeführt wird, richten sich bei der Längsstreckung insbesondere nach den Eigenschaften der siegelbaren und peelfähigen Deckschicht (A). Erfindungsgemäß wird die Längsstreckung bei einer Temperatur in einem Bereich von bevorzugt 60 bis 95 °C durchgeführt, wobei die Aufheiztemperaturen im Bereich von 60 bis 95 °C und die Strecktemperaturen im Bereich von 75 bis 95 °C liegen. Die Temperatur, bei der die Streckung in Querrichtung durchgeführt wird, kann in einem relativ großen Bereich variieren und richtet sich nach den gewünschten Eigenschaften der Folie. Sie liegt bevorzugt in einem Temperaturbereich von 90 °C (Beginn der Streckung) bis 140 °C (Ende der Streckung). Das Längsstreckverhältnis liegt allgemein im Bereich von 2:1 bis 4,5:1, bevorzugt von 2,1:1 bis 4:1 und besonders bevorzugt von 2,2:1 bis 3,5:1. Das Querstreckverhältnis liegt allgemein im Bereich von 3:1 bis 5:1, bevorzugt von 3,5:1 bis 4,5:1.

Bei der nachfolgenden Thermofixierung wird die Folie über eine Zeitdauer von etwa 0,1 bis 10 s bei einer Temperatur im Bereich von ca. 150 bis 250 °C gehalten. Anschließend wird die Folie in üblicher Weise aufgewickelt.

Nach der biaxialen Streckung kann die nicht siegelfähige Seite der Folie (Schicht (C)) nach einer der bekannten Methoden corona- oder flammbehandelt werden. Die Behandlungsintensität wird so eingestellt, dass sich eine Oberflächenspannung im Bereich von über 45 mN/m einstellt.

Zur Einstellung weiterer gewünschter Eigenschaften kann die Folie zusätzlich beschichtet werden. Typische Beschichtungen sind haftvermittelnd, antistatisch, schlupfverbessernd, hydrophil oder dehäsiv wirkend. Es bietet sich an, diese zusätzlichen Schichten über In-line-Beschichtung mittels wässriger Dispersionen nach dem Streckschritt in Längsrichtung und vor dem Streckschritt in Querrichtung auf die Folie aufzubringen.

Der Glanz der Folienoberfläche (B) im Falle einer zweischichtigen Folie bzw. der Glanz der Folienoberfläche (C) bei einer dreischichtigen Folie ist bevorzugt größer als 40 (gemessen nach DIN 67530 in Anlehnung an ASTM-D 523-78 und ISO 2813 mit Einstrahlwinkel 20°). In einer bevorzugten Ausführungsform beträgt der Glanz dieser Seiten mehr als 50 und in einer besonders bevorzugten Ausführungsform mehr als 60. Diese Folienoberflächen eignen sich daher insbesondere für eine weitere funktionelle Beschichtung, für die Bedruckung oder für die Metallisierung.

Die erfindungsgemäße Folie eignet sich hervorragend zum Verpacken von Nahrungs- und Genussmitteln, insbesondere zur Verpackung von Milchprodukten in Bechern und zur Verpackung von Fertiggerichten in Menüschalen (trays), bei denen peelfähige Polyesterfolien zum Öffnen der Verpackung verwendet werden.

Die nachstehende Tabelle (Tabelle 1) fasst die bevorzugten Folieneigenschaften noch einmal zusammen:

**Tabelle 1**

| **Deckschicht (A)** | **bevorzugt** | **besonders bevorzugt** | **ganz besonders bevorzugt** | **Einheit** | **Messmethode** |
|---|---|---|---|---|---|
| Anteil an Ethylen-polar-Ethylen-Copolymer | 30 bis 95 | 35 bis 90 | 40 bis 85 | Gew.-% | |
| Anteil Polyester | 5 bis 70 | 10 bis 65 | 15 bis 60 | Gew.-% | |
| Anteil an polar-Ethylen im Copolymer | 2,5 bis 15 | 3 bis 12 | 5 bis 11 | Mol-% | |
| Vicat-Erweichungstemperatur | ≤70 | ≤65 | ≤60 | °C | DIN EN ISO 306 |
| Dicke der Deckschicht (A) | 2 bis 20 | 3 bis 19 | 4 bis 18 | µm | |
| **Basisschicht (B)** | | | | | |
| Anteil Ethylenterephthalat/ Copolyester | 85 bis 97 | 90 bis 97 | 92 bis 97 | Mol-% | |
| Anteil Ethylenisophthalat/ Copolyester | 3 bis 15 | 3 bis 10 | 3 bis 8 | Mol-% | |
| **Folieneigenschaften** | | | | | |
| Dicke der Folie | 5 bis 500 | 10 bis 450 | 15 bis 400 | µm | |
| Mindestsiegeltemperatur von Deckschicht (A) gegen Standardsubstrate (für eine 60 µm dicke Folie) | ≤140 | ≤130 | ≤120 | °C | |
| Peelkraft von Deckschicht (A) gegen Standardsubstrate (für eine 60 µm dicke Folie) | ≥1,5 | ≥2,0 | ≥2,5 | N/15 mm | |
| Haftkraft zwischen Deckschicht (A) und Basisschicht (B) | >1,5 | >2,0 | >2,5 | N/15 mm | |

Zur Charakterisierung der Rohstoffe und der Folien werden im Rahmen der vorliegenden Erfindung die folgenden Messmethoden benutzt:

Messung des mittleren Durchmessers $d_{50}$

Die Bestimmung des mittleren Durchmessers $d_{50}$ des Antiblockmittels wird mittels Laser auf einem Malvern Master Sizer (Malvern Instruments, Ltd., GB) mittels Laserscannung durchgeführt (andere Messgeräte sind z. B. Horiba LA 500 oder Sympathec Helos (Sympathec GmbH, DE), welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten $d_{50}$-Wert (auch Median genannt).

SV-Wert

Der SV-Wert des Polymers wird durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel}-1) \bullet 1000.$$

Siegelnahtfestigkeit (Peelkraft)

Zur Bestimmung der Siegelnahtfestigkeit wird ein Folienstreifen (100 mm lang · 15 mm breit) auf ein entsprechendes Substrat aus PS oder PP gelegt und bei der eingestellten Temperatur von ≥ 130 °C, einer Siegelzeit von 1,0 s und einem Siegeldruck von 4 bar (Siegelgerät HSG/ET der Firma Brugger (München, DE), einseitig beheizte Siegelbacke) gesiegelt. Die gesiegelten Streifen werden nach Abkühlung auf Raumtemperatur unter einem Winkel von 180° (vgl. Figur 1) auseinander gezogen und die benötigte Kraft mit einer Abzugsgeschwindigkeit von 200 mm/min bestimmt. Die Siegelnahtfestigkeit wird in N pro 15 mm Folienstreifen angegeben (z. B. 3 N/15 mm). Fig. 1 zeigt die Anordnung von peelfähiger Folie (1) mit Deckschicht (A) (2) und Streifen aus PS (3) (z. B. von einem Joghurt-Becher) im Zug-Dehnungs-Messgerät.

Bestimmung der Mindestsiegeltemperatur

Mit dem Siegelgerät HSG/ET der Firma Brugger werden, wie zuvor bei der Messung der Siegelnahtfestigkeit beschrieben, heißgesiegelte Proben (Siegelnaht 15 mm · 100 mm) hergestellt, wobei die Folie bei unterschiedlichen Temperaturen mit Hilfe einer einseitig beheizten Siegelbacke bei einem Siegeldruck von 4 bar und einer Siegeldauer von 1 s gesiegelt wird. Die 180°-Siegelnahtfestigkeit (vgl. Figur 1) wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

Trübung

Die Trübung nach Hölz wird nach ASTM-D 1003-52 bestimmt.

Glanz

Der Glanz der Folie wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem (DE), Normlichtart C, 2°-Normalbeobachter. Der Weißgrad wird als WG = RY + 3RZ - 3RX definiert. WG = Weißgrad, RY, RZ, RX = entsprechende Reflexionsfaktoren bei Einsatz des Y-, Z- und X-Farbmessfilters.

Als Weißstandard wird ein Pressling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Schmelzindex (MFI)

Der Schmelzindex wird nach DIN EN ISO 1133 bei einem Auflagegewicht von 2,16 kg bei 190°C gemessen. Die Angabe erfolgt in g/10 min.

Vicat-Erweichungstemperatur

Die Vicat-Erweichungstemperatur wird nach DIN EN ISO 306 an einem Probekörper bestimmt, der die gleiche chemische Zusammensetzung aufweist wie diejenige der siegelfähigen Deckschicht (A). Zur Herstellung des Probekörpers wird dabei üblicherweise so vorgegangen, dass zunächst in einem Zweischneckenextruder (mit Entgasung) aus der Polymer- und Additivmischung ein Granulat hergestellt wird. Aus diesem wird dann in einem weiteren Schritt der Probekörper spritzgegossen.

Im Folgenden wird die Erfindung anhand von Beispielen näher erläutert, ohne darauf beschränkt zu sein.

**Beispiel**

Chips aus Ethylenterephthalat-Ethylenisophthalat-Copolyester mit 95 Mol-% Ethylenterephthalat und 5 Mol-% Ethylenisophthalat wurden dem Extruder für die Basisschicht (B) zugeführt. Daneben wurden Chips aus Polyethylenterephthalat und Partikel dem Extruder (Zweischneckenextruder) für die nicht siegelfähige Deckschicht (C) zugeführt. Entsprechend den in untenstehender Tabelle aufgeführten Verfahrensbedingungen wurden die Rohstoffe in den beiden jeweiligen Extrudern aufgeschmolzen und homogenisiert.

Daneben wurde einem Zweischneckenextruder mit Entgasungsvorrichtung(en) eine Mischung aus 80 Gew.-% Ethylen-Methylacrylat-Copolymer (Lotryl 24 MA07 der Fa. Arkema, DE) und 20 Gew.-% Polyester für die siegelbare und peelfähige Deckschicht (A) zugeführt. Entsprechend den in untenstehender Tabelle angeführten Verfahrensbedingungen wurde der Rohstoff in dem Zweischneckenextruder aufgeschmolzen.

Dann wurden durch Coextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung und anschließende Fixierung eine transparente, dreischichtige Folie mit ABC-Aufbau in einer Gesamtdicke von 60 μm hergestellt. Die Dicke der Deckschicht (A) betrug 10 μm, die der Deckschicht (C) 2 μm.

Deckschicht (A)

| | |
|---|---|
| 80 Gew.% | Ethylen-Methylacrylat-Copolymer (Lotryl 24 MA07 der Fa. Arkema, Düsseldorf, DE) mit einem Anteil von 9,4 Mol-% (entspricht etwa 24 Gew.-%) Methylacrylat und einem Schmelzindex (MFI 2,16/190°C) von 7 g/10 min |
| 20 Gew.-% | Polyester (= Copolymeres aus 78 Mol-% Ethylenterephthalat, 22 Mol-% Ethylenisophthalat) mit einem SV-Wert von 850. Die Glasübergangs- temperatur des Polyesters beträgt ca. 75 °C. |

Basisschicht (B)

| | |
|---|---|
| 100 Gew.-% | Ethylenterephthalat-Ethylenisophthalat-Copolyester mit 95 Mol-% Ethylen- terephthalat und 5 Mol-% Ethylenisophthalat mit einem SV-Wert von 800 |

Deckschicht (C), Mischung aus

| | |
|---|---|
| 85 Gew.-% | Polyethylenterephthalat mit einem SV-Wert von 800 |
| 15 Gew.-% | Masterbatch aus 99 Gew.-% Polyethylenterephthalat (SV-Wert von 800) und 1,0 Gew.-% Sylobloc 44 H (synthetisches $SiO_2$, Grace, Worms, DE), $d_{50}$ = 2,5 μm |

Die Herstellungsbedingungen in den einzelnen Verfahrensschritten waren:

| | | | | |
|---|---|---|---|---|
| Extrusion | Temperaturen | A-Schicht:<br>B-Schicht:<br>C-Schicht: | 280<br>280<br>280 | °C<br>°C<br>°C |

(fortgesetzt)

| | | | | |
|---|---|---|---|---|
| | Temperatur der Abzugswalze | | 25 | °C |
| Längsstreckung | Aufheiztemperatur | | 70-90 | °C |
| | Strecktemperatur | | 85 | °C |
| | Längsstreckverhältnis | | 3,0 | |
| Querstreckung | Aufheiztemperatur | | 105 | °C |
| | Strecktemperatur | | 135 | °C |
| | Querstreckverhältnis | | 4,0 | |
| Fixierung | Temperatur | | 230 | °C |
| | Dauer | | 3 | s |

Die Folie ließ sich einwandfrei produzieren, ohne dass ein Kleben der Folie auf den Walzen der Längsstreckung festgestellt wurde.

Die Mindestsiegeltemperaturen und die Siegelnahtfestigkeiten der Folie gegenüber PS und PP sind in Tabelle 2 eingetragen. Für die Prüfung der Siegelnahtfestigkeit wurde die Folie bei 180 °C gegen PS und PP gesiegelt (Siegeldruck 4 bar, Siegelzeit 1,0 s). Anschließend wurden Streifen des Verbundes aus erfindungsgemäßer Folie und Substrat entsprechend der vorgenannten Messvorschrift auseinander gezogen. Es zeigte sich jeweils das gewünschte Abschälen der Folien vom Substrat.

Tabelle 2

| | PS | PP | Einheit |
|---|---|---|---|
| Mindestsiegeltemperaturen | 100 | 102 | °C |
| Siegelnahtfestigkeit | 7,8 | 6,5 | N/15 mm |

**Vergleichsbeispiel 1**

Es wurde das erfindungsgemäße Beispiel unter modifizierten Bedingungen wiederholt. In der Basisschicht (B) wird anstelle des Ethylenterephthalat-Ethylenisophthalat-Copolyesters Polyethylenterephthalat verwendet. Die Längsstreckung wurde dabei mit folgendem Parametersatz durchgeführt:

| | | | | |
|---|---|---|---|---|
| Extrusion | Temperaturen | A-Schicht:<br>B-Schicht:<br>C-Schicht: | 280<br>280<br>280 | °C<br>°C<br>°C |
| | Temperatur der Abzugswalze | | 25 | °C |
| Längsstreckung | Aufheiztemperatur | | 70-110 | °C |
| | Strecktemperatur | | 105 | °C |
| | Längsstreckverhältnis | | 3,5 | |

Die Folie verklebte vergleichsweise oft in der Längsstreckung und wickelte sich dabei mehrmals um die Streckwalze, was zum Abbruch der Produktion führte. Die Walzen in der Längsstreckung mussten aufgrund von anhaftenden Polymerresten aus der Deckschicht (A) ausgetauscht und gereinigt werden. Damit ist ein hoher wirtschaftlicher Verlust verbunden.

**Patentansprüche**

**1.** Coextrudierte, biaxial orientierte Polyesterfolie, umfassend eine Basisschicht (B) und eine Deckschicht (A), wobei

a) die Basisschicht (B) überwiegend aus einem Copolyester besteht, der Ethylenterephthalat- und Ethylenisophthalat-Einheiten enthält, wobei der Anteil an Ethylenisophthalat-Einheiten im Copolyester zwischen 3 und 15 Mol-% liegt, und
b) die Deckschicht (A)

30 bis 95 Gew.-% Ethylen-polar-Ethylen-Copolymer und
5 bis 70 Gew.-% Polyester enthält,
wobei der Anteil an polar-Ethylen im Copolymer 2,5 bis 15 Mol-% beträgt.

**2.** Polyesterfolie nach Anspruch 1, **dadurch gekennzeichnet, dass** die Basisschicht (B) den Copolyester zu mindestens 80 Gew.-%, bevorzugt zu 100 Gew.-%, enthält.

**3.** Polyesterfolie nach Anspruch 1 oder 2, **dadurch gekennzeichnet, dass** die Basisschicht (B) ein weißfärbendes Pigment in einer Konzentration von 3 bis 20 Gew.-% enthält.

**4.** Polyesterfolie nach einem oder mehreren der Ansprüche 1 bis 3, **dadurch gekennzeichnet, dass** die Folie als alleiniges weißfärbendes Pigment Titandioxid enthält.

**5.** Polyesterfolie nach einem oder mehreren der Ansprüche 1 bis 4, **dadurch gekennzeichnet, dass** die Deckschicht (A) zu mindestens 90 Gew-%, bevorzugt zu 100 Gew.-%, aus Copolymer und Polyester besteht.

**6.** Polyesterfolie nach einem oder mehreren der Ansprüche 1 bis 5, **dadurch gekennzeichnet, dass** der Polyester der Deckschicht (A) ein Copolyester ist, der Ethylenterephthalat- und Ethylenisophthalat-Einheiten enthält.

**7.** Polyesterfolie nach einem oder mehreren der Ansprüche 1 bis 6, **dadurch gekennzeichnet, dass** die Deckschicht (A) 0,5 bis 10 Gew.-% Antiblockmittel enthält.

**8.** Polyesterfolie nach einem oder mehreren der Ansprüche 1 bis 7, **dadurch gekennzeichnet, dass** die Deckschicht (C) nicht siegelfähig ist.

**9.** Polyesterfolie nach einem oder mehreren der Ansprüche 1 bis 8, **dadurch gekennzeichnet, dass** die Deckschicht (C) Antiblockmittel, insbesondere $SiO_2$, enthält.

**10.** Polyesterfolie nach einem oder mehreren der Ansprüche 1 bis 9, **dadurch gekennzeichnet, dass** die Mindestsiegeltemperatur der Deckschicht (A) gegen unpolare Substrate gleich oder kleiner 140 °C ist.

**11.** Polyesterfolie nach einem oder mehreren der Ansprüche 1 bis 10, **dadurch gekennzeichnet, dass** die Siegelnahtfestigkeit der Deckschicht (A) zu unpolaren Substraten gleich oder größer 1,5 N/15 mm Folienbreite ist.

**12.** Verfahren zur Herstellung einer Polyesterfolie nach einem oder mehreren der Ansprüche 1 bis 11 umfassend die Schritte:

a) Herstellen einer mehrschichtigen Folie durch Coextrusion,
b) biaxiales Strecken der Folie und
c) Thermofixieren der gestreckten Folie.

**13.** Verfahren nach Anspruch 12, **dadurch gekennzeichnet, dass** die Längsstreckung bei Temperaturen von 60 bis 95 °C durchgeführt wird.

**14.** Verwendung einer Polyesterfolie nach einem oder mehreren der Ansprüche 1 bis 11 als Verpackungsmaterial für Nahrungs- und Genussmittel.

**15.** Verwendung nach Anspruch 14 als abziehbare Folie für Lebensmittelbehältnisse.

**Figur 1**

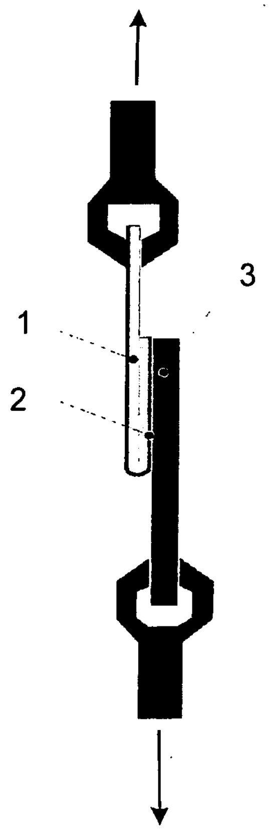

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10128711 A
- US 4333968 A
- WO 03033258 A
- WO 06055656 A
- EP 1471096 A
- EP 1471097 A
- EP 1475228 A
- EP 1475229 A
- EP 1471094 A
- EP 1471098 A
- EP 1165317 B


### In der Beschreibung aufgeführte Nicht-Patentliteratur


- Handbook of Thermoplastic Polyesters. Wiley-VCH, 2002
- Polyesters, Films. Encyclopedia of Polymer Science and Engeneering. John Wiley & Sons, vol. 12